# EUROPEAN PATENT APPLICATION

(11) **EP 4 603 966 A1**
(43) Date of publication of application: **20.08.2025**
(21) Application number: 25156610.5
(22) Date of filing: 07.02.2025
(51) Int. Cl.: G06F 8/65, G06F 9/455

(54) **SYSTEMS AND METHODS FOR PERSISTED CONTAINER UPDATES**

(30) Priority: 16.02.2024 US 202463554910 P; 07.05.2024 US 202418657497
(71) Applicant: Microsoft Technology Licensing, LLC, Redmond, WA 98052 (US)
(72) Inventor: De Marco, Jonathan A., Redmond, 98052-6399 (US); Bostanci, Hakki Tunc, Redmond, 98052-6399 (US); Wong, Graham, Redmond, 98052-6399 (US); Chavva, Vinod Reddy, Redmond, 98052-6399 (US); Chagani, Shaheed Gulamabbas, Redmond, 98052-6399 (US)
(74) Representative: CMS Cameron McKenna Nabarro Olswang LLP

(57) **Abstract**

Examples of the present disclosure describe devices, systems, and methods for persisting containers across updates. In examples, a computing device receives an update to a base layer of the device associated with a persisted storage of a container stored by the device. The content of the persisted storage is used as input to the base layer. The device applies the update to the base layer and determines the side effects of the update on the content of the persisted storage. The device then records the sequence of operations as a delta layer for the base layer and side effects as a delta storage for the persisted storage. Recording includes associating the delta storage with the persisted storage, the delta layer with the base layer, and the persisted storage with the base layer, such that the content of the persisted storage is used as input to the delta layer.

## Description

### BACKGROUND

Traditionally, container computing environments are virtual computing environments that are generated with a set of read-only directories and files and writeable directories and files. Containers can be a cloud or non-cloud environment that surrounds an application keeping it independent of other environments, including other containers. The read-only directories and files include system software, forming a read-only portion of a container. The writeable directories and files include customizable user content, forming a writeable portion of a container. A container stores changes to a read-only portion in a writeable portion of a container. The state of a container identifying the changes to a read-only portion of a container and additional content saved in a writeable portion of a container is preserved using persistent storage to store the contents of a writeable portion of a container. While the state of a container can be preserved, any modifications to the content in the read-only portion of a container (e.g., modifications that are not specific to a container, such as an operating system update) can cause dependency issues with the preserved state of a writeable portion of a container. This limits the ability to preserve the state of a container across updates to a read-only portion of a container, such as an operating system update.

It is with respect to these and other general considerations that the aspects disclosed herein have been made. Also, although relatively specific problems may be described, it should be understood that the examples should not be limited to solving the specific problems identified in the background or elsewhere in this disclosure.

### SUMMARY

Examples of the present disclosure describe systems and methods for implementing devices for persisting containers across update.

According to one or more embodiments of the present disclosure, a device supporting state persistence across updates includes a processor and a memory coupled to the processor, consisting of computer-executable instructions executed by the system to perform operations. The operations include receiving an update to a base layer of the device associated with a persisted storage containing content used as input to the operations represented by base layer. The device performs a servicing procedure that includes a sequence of operations to apply the update to the base layer. The device then determines the side effects of the update on the content of the persisted storage and records the sequences of operations and side effects in a delta layer and delta storage, respectively. The recorded delta layer and delta storage are associated with the original base layer and persisted storage to keep original contents intact, but persisted storage continues to be used as input to a base layer.

This summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

### BRIEF DESCRIPTION OF THE DRAWINGS

Examples are described with reference to the following Figures.
FIG. 1 illustrates a block diagram of an example container management system for persisting containers across updates.
FIG. 2 is a flow diagram of the interaction between components of an exemplary container management system.
FIGS. 3A-C illustrate the management of dependencies of layers and persisted storages of containers.
FIGS. 4A-B illustrate the transformation of directed acyclic graphs (DAGs) representing states of containers.
FIG. 5 is a flow diagram of merging layers to form new combined layers of containers.
FIG. 6 depicts an example method for managing container updates with persisted storage.
FIG. 7 depicts an example method for managing rollbacks of container updates with persisted storage.
FIG. 8 depicts an example method for merging updates of containers managed using DAGs.
FIG. 9 is a block diagram illustrating an example of the physical components of a computing device for practicing aspects of the disclosure.

### DETAILED DESCRIPTION

Containers are generated by performing filesystem operations, such as creating, renaming, updating, and deleting a set of directories and files. The resultant directories and files of a set of filesystem operations are identified as a layer associated with a container. A container may be associated with multiple layers, each a result of a set of filesystem operations. The layers associated with a container may be part of a read-only portion that is not changed post-generation of a container. For example, layers in a read-only portion may include a layer each for core kernel, drivers, and other system libraries. The layers that are part of a read-only portion are not persisted between sessions of using a container. A container includes at least one additional layer forming a writeable portion, including modifications of directories and files in a read-only portion of a container. For example, to install a new device driver that can be used by a container, a driver directory in a read-only portion of the container is copied to a writeable portion of the container and the driver directory copied to the writeable portion is modified to include files associated with the new device driver. Layers forming a writeable portion of a container are persisted to preserve the state of a container.

The relation between modified directories and files in a writeable portion and the unmodified directories and files in a read-only portion creates dependencies between layers representing a container's writeable and read-only portions. In examples, dependencies between directories and files in the writeable portion and the read-only portion exist because the directories and files of the read-only portion are copied to the writeable portion. For instance, an application (represented by a set of files) that is located in an underlying operating system (the read-only portion) may be configured (e.g., by an administrator or an owner of the application) with a set of default settings. To enable a user to access and modify (e.g., customize) the application, a link to the application and one or more customizable setting for the application are copied from the operating system to a writable layer (the writeable portion) of the container. Alternatively, the entire application may be copied from the operating system to the writable layer. Due to the dependency between layers in read-only and writeable portions of a container, an update of the content of layers in a read-only portion of a container results in dependencies with the layers in a writeable portion becoming invalid. Such invalid layers need to be discarded, and the persisted state of a container is lost. For example, an update to an operating system forming a layer that is part of a read-only portion of a container results in updates to registry keys, such as updating the registry key names, and any custom values set in the writeable portion are invalid until the registry key names are updated in the writeable portion. Layers representing a writeable portion of a container can be generated by applying similar modifications on layers representing the updated read-only portion of a container. However, such an operation is not reversible, and a request to rollback an update to layers of a read-only portion of a container results in the regeneration of dependent layers of a writeable portion of a container.

The disclosed system provides a solution that expands a container's capability to preserve state across updates to read-only directories and files associated with a container. In examples, an update to a read-only portion of a container and side effects on content in a writeable portion due to the update are managed as separate layers associated with the original layers of a read-only and a writeable portion of a container. The side effects include updates to the content. For example, the installation of a new version of a driver as part of a container update resulting in the removal of a registry key or the renaming of a key whose previously set value stored in a writeable portion needs to be updated as a side effect to accommodate the changes to the registry key. The side effects are tracked to ensure that the stored content in a writeable portion is not lost across updates to a container.

When re-instantiating a container to load it, the dependency between layers is reviewed to perform updates and determine side effects to container layers. Determined side effects represent updates that occur to attributes or content of the directories and files in a writeable portion of a container as a result of executing a sequence of operations to apply the update to the read-only portion. For example, an operating system update to a layer that is part of a read-only portion requires modifications to directory paths of a writeable portion. The modification of the directory paths are side effects of executing the sequence of operations to update the operating system. In another example, an operating system update to a layer that is part of a read-only portion requires an update to a variable name of a registry key set with a custom value in a registry file in a writeable portion of a container. The update of the variable name is a side effect of executing the sequence of operations to update the operating system.

In examples, the side effects to container layers are captured by a component of a layer used to record the side effects (a delta layer). For instance, a filesystem filter driver that is attached to the root of a delta layer is used to capture and record the side effects of executing a sequence of operations. The filesystem filter driver intercepts all input/output (I/O) operations for one or more filesystems or file system volumes and filters the I/O operations in a specified manner. As one example, filesystem filter driver intercepts all input/output (I/O) operations associated with a sequence of operations to apply an update to a read-only portion and ensures that only modifications (e.g., data writes) are persisted to the delta layer.

The disclosed system utilizes a data structure to manage container updates with a persisted state. A data structure is used to record and manage dependencies between container layers. The data structure is updated to include new layers representing the updates, side effects, and the relationship between the new layers. The original dependencies between layers after updates to the content of layers is maintained in a read-only portion of a container. The separate layers are used to update content in read-only and writeable portions of a container, ensuring the maintenance of existing dependencies between layers of a container. The data structure may also be used to determine the layers to remove as part of a rollback of an update.

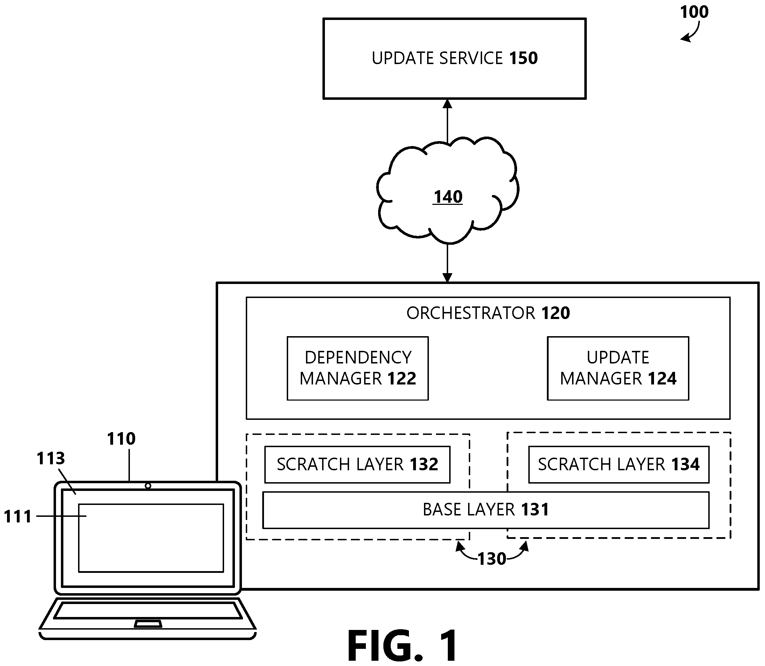

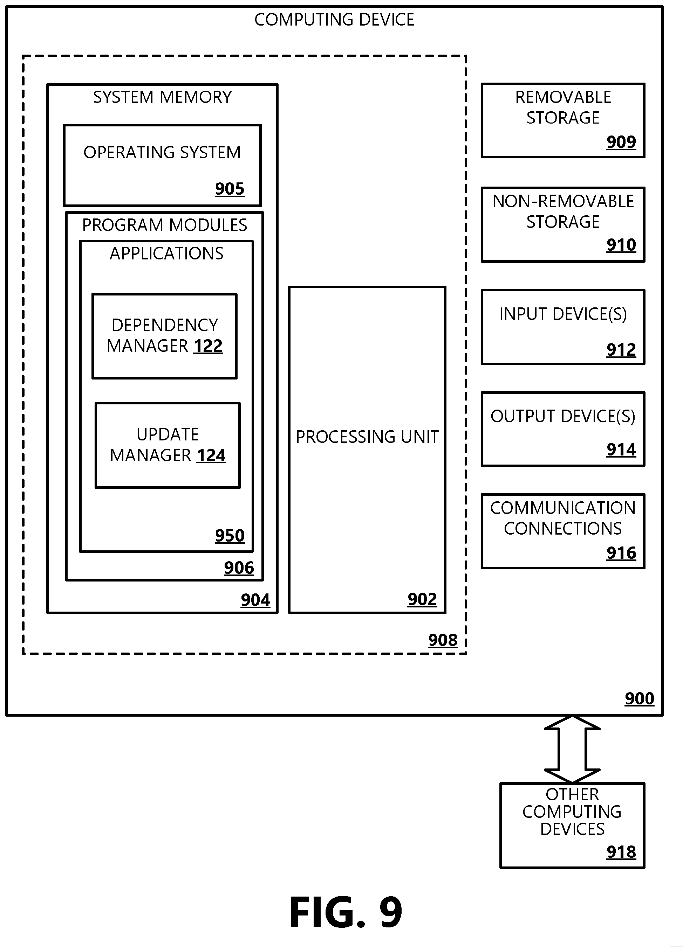

FIG. 1 illustrates a block diagram of an example container management system for persisting containers across updates. The system 100, as depicted, is a combination of interdependent components that interact to form an integrated whole. Some components of system 100 are illustrative of software applications, systems, or modules that operate on a computing system or across a plurality of computing systems. Any suitable computer system(s) may be used, including web servers, application servers, network appliances, dedicated computer hardware devices, virtual server devices, personal computers, a system-on-a-chip (SOC), or any combination of these and/or other computing devices known in the art. In one example, components of systems disclosed herein are implemented on a single processing device. The processing device may provide an operating environment for software components to execute and use resources or facilities of such a system. An example of processing device(s) comprising such an operating environment is depicted in FIG. 9. In another example, the components of systems disclosed herein are distributed across multiple processing devices.

In Figure 1, system 100 comprises computing device 110, application user interfaces (UIs) 111, display screen 113, orchestrator 120, containers 130, network 140, and update service 150. Although system 100 is depicted as comprising a particular combination of computing devices and components, the scale and structure of devices and components described herein may vary and may include additional or fewer components than those described in Figure 1. For instance, update service 150 may be implemented by computing device 110 and/or one or more of orchestrator 120 or containers 130 may be implemented remotely from computing device 110.

According to example implementations, computing device 110 may take a variety of forms, including, for example, desktop computers, laptops, tablets, smartphones, wearable devices, gaming devices/platforms, virtualized reality devices/platforms (e.g., virtual reality (VR), augmented reality (AR), mixed reality (MR)), etc. The computing device 110 has an operating system that provides a graphical UI (GUI) that allows users to interact with the computing device 110 via graphical elements, such as application windows (e.g., display areas), buttons, icons, and the like. For example, the graphical elements are displayed on a display screen 113 of the computing device 110. The graphical elements can be selected and manipulated via user inputs received via a variety of input device types (e.g., keyboard, mouse, stylus, touch, spoken commands, gesture).

Computing device 110 includes orchestrator 120, which determines and manages dependencies between layers (e.g., base layer 131, scratch layer 132) of directories and files of containers 130. Orchestrator 120 manages containers 130 by reviewing the dependencies of layers of containers 130 and updating layers of containers 130. Orchestrator 120 includes dependency manager 122, which manages dependencies between layers of containers 130. Orchestrator 120 also includes update manager 124, which updates layers of containers 130 and determines the side effects of layers of containers 130 based on updated layers.

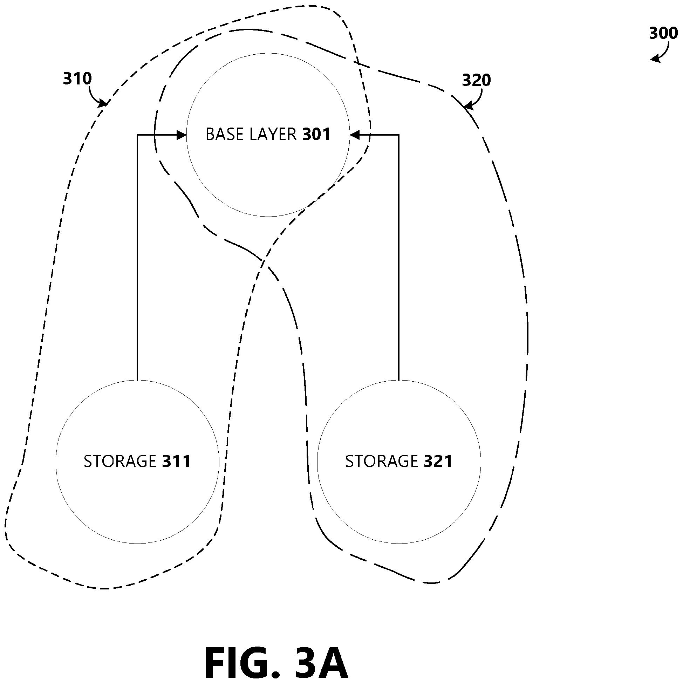

Dependency manager 122 uses a data structure to maintain information related to dependencies between layers of containers 130. Dependency manager 122 updates dependencies based on updates applied to layers of containers 130 by update manager 124. In some examples, dependency manager 122 updates dependencies between layers by merging container layers. Dependency manager 122 records sets of operations that form an update and side effects of updates as delta layers of containers 130. A detailed description of example data structures used to maintain dependency information of layers of containers 130 is presented in FIGS. 3A-C description below.

Update manager 124 receives updates from update service 150 to update layers of containers 130 identified by update service 150. Update manager 124 determines the side effects of the received update on layers of containers 130 other than the layers identified by the update service. Update manager 124 also updates layers of containers 130 upon receiving rollback commands from update service 150. Update manager 124 reviews information maintained by dependency manager 122 to determine layers of containers 130 for which a previous update of layers of containers 130 is to be rolled back. For example, a rollback request to revert updates to base layer 131 of containers 130 results in a rollback of side effects of updates to other layers (e.g., scratch layers 132 and 134) of containers 130. Update manager 124 communicates with dependency manager 122 to record changes to layers (e.g., the addition of new layers, the dependency of new layers on the existing layers, and deletion of existing layers).

Computing device 110 includes containers 130 with all the containers sharing base layer 131. In examples, base layer 131 is a set of files that represents functionality provided to container 130. Examples of base layer 131 includes an operating system, a basic input/output system (BIOS), a device driver, or a system kernel. In some examples, base layer 131 includes a set of files for providing functionality to containers 130. For instance, base layer 131 includes a number of files that form a kernel to boot containers 130 and a number of device drivers, such as USB drivers, to operate peripheral devices used to provide input to containers 130, such as keyboard and mouse. Each container in containers 130 includes an independent scratch layer (e.g., 132 and 134) to customize the container of containers 130. For example, each of containers 130 is customized by installing custom software (e.g., applications, services, firmware) or updates to base layer 131 or by modifying settings or preferences of base layer 131.

Scratch layers 132-134 are persisted to preserve the state of containers 130. Scratch layers can be virtual hard drives or other types of data storage with an underlying physical drive to persist the state of containers 130. Scratch layers 132 and 134 include directories and/or files with software and data generated during the usage of containers 130. For example, scratch layer 132 include any customization to an operating system in base layer 131. Scratch layers 132 and 134 are writeable portions of containers 130 (also referred to herein as "storage") that are performed by executing filesystem operations. In examples, scratch layers 132 and 134 are a set of layers stacked hierarchically in chronological order in which they are applied.

Update service 150 is a server providing updates to containers 130 (e.g., sporadically or at regular intervals). Orchestrator 120 requests for updates of containers 130 from updates service 150 or updates service 150 periodically notifies orchestrator 120 that updates of containers 130 are available. In example implementations, update service 150 operates on a device located remotely from the computing device 110. For instance, the computing device 110 communicates with update service 150 using one or a combination of networks 140 (e.g., a private area network (PAN), a local area network (LAN), and a wide area network (WAN)). In some examples, update service 150 is implemented in a cloud-based environment or server-based environment using one or more cloud resources, such as server devices (e.g., web servers, file servers, application servers, database servers), personal computers (PCs), virtual devices, and mobile devices. The hardware of the cloud resources is distributed across disparate regions in different geographic locations.

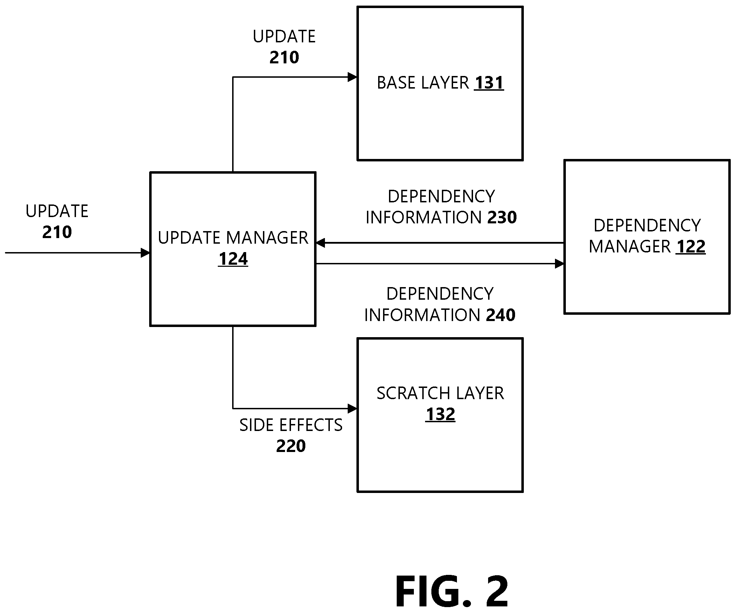

FIG. 2 is a flow diagram of the interaction between components of an example container management system (e.g., system 100 of FIG. 1) to update layers of container 130. As illustrated in FIG. 2, update manager 124 performs an update of various layers (e.g., base layer 131 and scratch layer 132) of a container (e.g., containers 130 of FIG. 1). Update manager 124 analyzes update 210 received from an update service (not illustrated) to update layers of a container. Update manager 124 analyzes update 210 to determine base layer 131 is to be updated and transmits update 210 to base layer 131. Update manager 124 also analyzes update 210 to determine side effects 220 to apply to scratch layer 132. Update manager 124 determines update 210 is to be applied to base layer 131 and side effects 220 are to be applied to scratch layer 132 based on dependency information 230 provided by dependency manager 122. Dependency information 230 includes dependency relationships between directories and files linked between layers. For example, dependency information may include a common set of directories and files between layers or links between modified directories and files and unmodified original directories and files. Update manager 124 determines a set of operations to apply to base layer 131 based on update 210 and records the information as a new layer (not illustrated). The new layer is an extension of base layer 131 that includes all the updates to overwrite the files and directories of base layer 131. For example, the new layer may include a set of directories and files that will replace or be added to the directories and files existing in base layer 131. Similarly, update manager 124 determines a set of operations to apply to scratch layer 132 based on side effects 220 and records the information as a new scratch layer.

Update manager 124 submits the information of a new layer and a new scratch layer as dependency information 240 to dependency manager 122. Dependency information 240 may include links between directories and files listed in new layer and new scratch layer. Dependency information 240 may be an update of dependency 230 received by update manager 124. Dependency manager 122 stores dependency information 240 in a data structure. For example, dependency manager 122 may store dependency information in a Directed Acyclic Graph (DAG) showing a dependency path between layers of a container. The DAG, including dependency information, may be traversed to find the dependency path of a layer. Although the examples provided herein are primarily discussed in the context of a DAG, the use of other types of data structures is contemplated (e.g., relational databases and key-value stores). For example, dependency information may be stored in tables with key-value pairs. In the key-value pairs, a layer depending on another layer is a key in the table, and a layer on which other layers depend is a value in the table. A layer may be provided as a key to look up a layer (a value) on which it depends. A detailed description of generating and managing dependency information 230 using a DAG data structure is presented in the description of FIGS. 3A-C below.

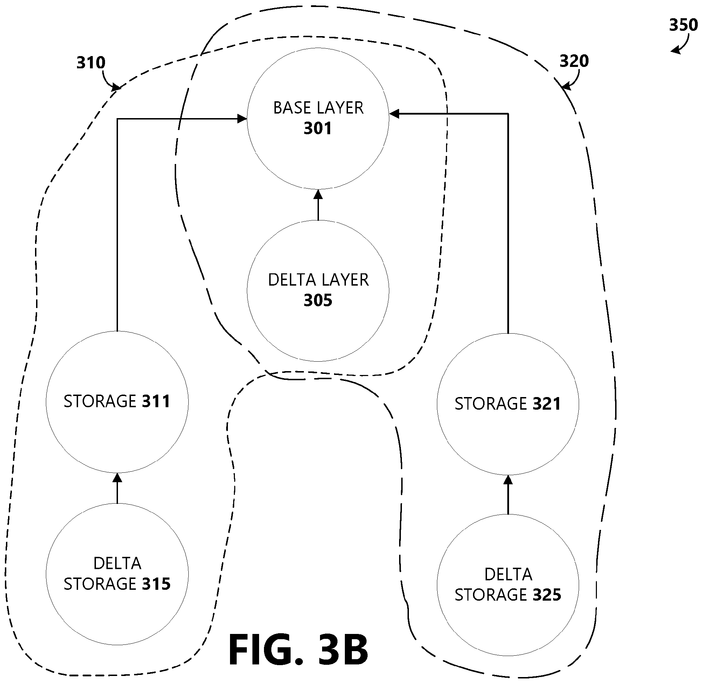

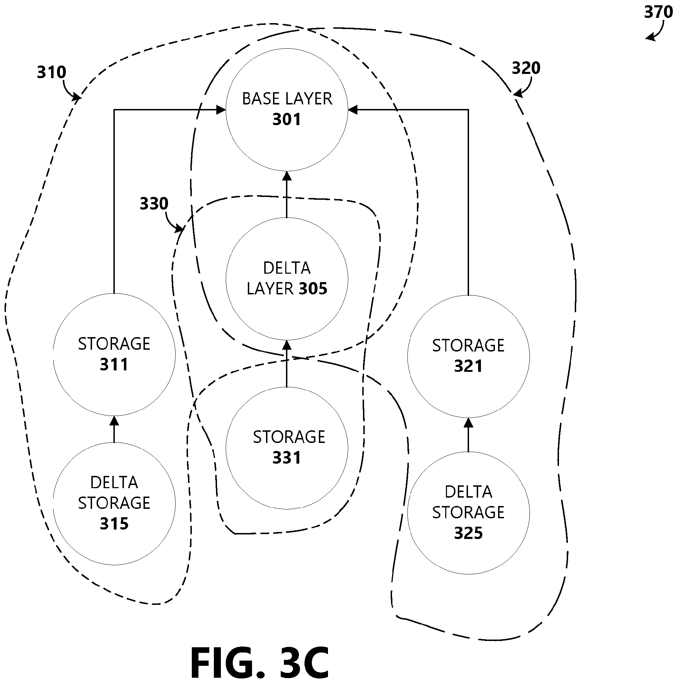

FIGS. 3A-C illustrates the management of dependencies of layers and persisted storages of containers. As illustrated in FIGS. 3A-3C, containers 310, 320, and 330 are presented using DAGs 300, 350, and 370. FIG. 3A represents the original state of containers 310 and 320 before updating base layer 301. FIG. 3B represents the updated state of containers 310 and 320 after updating base layer 301. FIG. 3C represents the state of containers 310, 320, and a new container 330, based on the updated state shown in FIG. 3B. Base layer 301 in FIGS. 3A-C is similar in functionality to base layer 131 (as shown in FIG. 1) representing the files used in containers. Base layer 301 and base layer 131 can be used interchangeably. For example, base layer 301 may include core kernel files used to boot containers 310, 320, and 330. Delta layers 305, 315, and 325 are similar in functionality to scratch layers 132 and 134 (as shown in FIG. 1), representing update operations to perform on files in base layer 301, causing side effects to contents of storages 311 and 321. Delta layers 305, 315, and 325 and scratch layers 132, and 134 can be used interchangeably. Containers 310, 320, and 330 are similar in functionality to containers 130 (as shown in FIG. 1), providing a simple computing environment.

Containers 310, 320, and 330 include base layer 301, which is shared across containers 310, 320, and 330. As illustrated in FIGS. 3A-C, storages 311 and 321 store user updates to base layer 301 and other customizations specific to containers 310 and 320, respectively. Storages 311 and 321 represent scratch layers (e.g., scratch layers 132 and 134 of FIG. 1) of containers 310 and 320, respectively. Storages 311 and 321 are used as input to the base layer 301. For example, storages 311 and 321 include user updates such as a registry key value which is used as input by a device driver that is part of base layer 301.

A container orchestrator (e.g., orchestrator 120 of FIG. 1) manages dependencies between layers and persisted storages in a DAG, as shown in FIG. 3A. Each node in the graph represents a container layer that includes a set of directories and files that are a result of a set of filesystem operations. A node may include a listing of directories and files and filesystem operations that help create and modify the listed directories and files. An update to a container (e.g., container 310, 320) is applied using a servicing procedure. As shown in FIG. 3B, the side effects of the servicing procedure on base layer 301 and storage 311 are represented as delta layer 305 and delta storage 315. In examples, after base layer 301 has been updated, container 310 is accessed using delta storage 315. For instance, if container 310 was closed or suspended to perform the update to base layer 301, container 310 is initiated using (e.g., booted up from) delta storage 315 upon reopening or resuming container 310.

As illustrated in FIG. 3B, DAG 350 includes representations of containers 310 and 320 with update states based on an update to base layer 301. The sequence of operations representing an update to base layer 301 is recorded in DAG 350 as delta layer 305. Update manager 124 (as shown in FIG. 1) may identify the sequence of operations forming an update to base layer 301 and share the sequence of operations with dependency manager 122 to record as delta layer 305 in DAG 350. Side effects to contents of storage 311 are recorded as delta storage 315 and side effects to contents of storage 321 are recorded as delta storage 321 of DAG 350. DAG 350 depicts that container 310 is updated to include representations of layers used to update container 310 and container 320 is updated to include representations of layers used to update container 320.

Determining operations to update base layer 301, determining the side effects of those operations on storages 311 and 321, and recording the side effects as separate layers (e.g., delta layer 305, delta storage 315, and delta storage 325) isolates the update and the side effects from existing base layer 301, storage 311, and storage 321. This isolation ensures existing base layer 301, storage 311, and storage 321 are not affected by the update, which preserves data integrity of container 310 by preventing the unintended modification of existing base layer 301, storage 311, and storage 321. Additionally, this isolation facilitates expeditious data recovery and improves container availability, both of which improve the user experience. For instance, in the event of an unsuccessful update (e.g., due to data corruption or malicious software), the update and the side effects can be safely, easily, and quickly removed to revert to existing base layer 301, storage 311, and storage 321 without making any changes to the directories and files in the original base layer 301 and storages 311 and 321. As one example, to rollback (e.g., restore) base layer 301 to its pre-update condition, the node representing delta layer 305 is removed from DAG 350, which causes the set of operations included within delta layer 305 to be reversed or otherwise unapplied to base layer 301. As another example, to rollback storage 311 to its pre-update condition, the node representing delta storage 315 is removed from DAG 350, which causes the set of operations included within delta storage 315 to be reversed or otherwise unapplied to storage 311. In such examples, a rollback may target a specific layer (e.g., delta layer 305) or node (e.g., delta storage 315), or a rollback may be target multiple or all layers and nodes created in response to an update.

In the event that a container is subsequently created based on the state of the layers of containers 310 and 320, the persisted storage of a new container is created using the latest servicing layer (e.g., delta layer 305). As illustrated in FIG. 3C, DAG 370 depicts a new container (e.g., container 330) with a new persisted storage (e.g., storage 331) parented off the latest servicing layer (e.g., delta layer 305).

As the number of separate layers in a container increases, the DAG representing the layers and the dependency relationships between layers may not be manageable. Additionally, maintaining multiple layers in a DAG indefinitely causes wastage of disk space to store details about each layer. Further, maintaining multiple layers causes performance issues by requiring each layer to applied individually in a sequential order instead of combining the operations and side effects represented by nodes in a DAG. Moreover, a layer may include operations which revert or override the operations performed in the layer it depends on making the existence of the layer and its dependent layer redundant. By merging layers and storages represented by nodes in a DAG, containers represented by a DAG can be instantiated faster with fewer operations to apply due to fewer layers and use less storage.

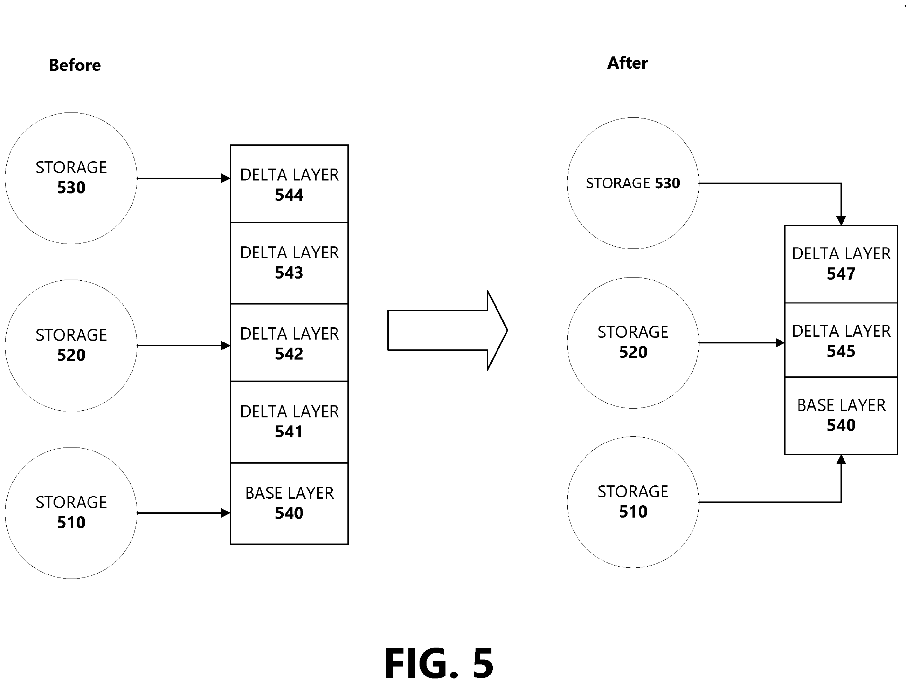

The nodes representing servicing storage (e.g., delta storage 315, 325 of FIG. 3B) can be merged into their parent storage (e.g., storage 311, 321 of FIG. 3B), as the servicing storages depend on the storages within the same container. However, servicing layers (e.g., delta layer 305 of FIG. 3B) may have dependencies from storages of multiple containers and may not be able to be merged with their parent layers. A detailed description of the process of selecting and merging service layers is presented in the FIG. 5 description below.

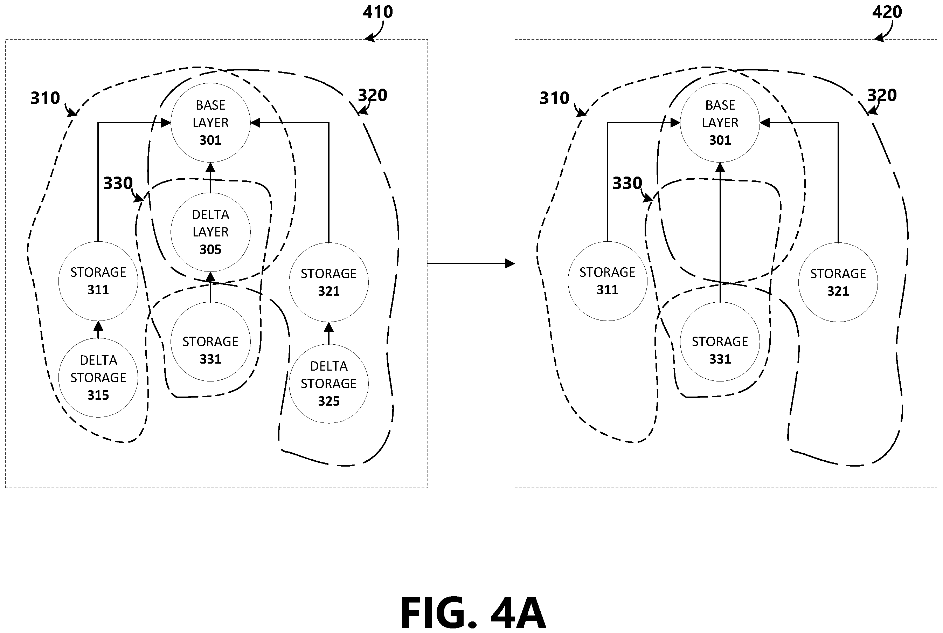

FIGS. 4A-B illustrate the transformation of DAGs representing states of containers. A DAG is transformed upon update to software used by containers or upon shutting down a container. Software updates may include the update to existing software (e.g., operating system update), installation of new software (e.g., driver or an application), or a rollback of a previous software update. In some examples, a DAG is transformed upon shutting down of containers. A DAG is transformed by removing nodes and edges connecting nodes upon rolling back an update. In some examples, a DAG is transformed by adding nodes and edges connecting nodes upon application of a software update. For example, in FIG. 3B, DAG 350 representing states of containers 310 and 320 is updated by adding nodes delta layer 305 and delta storages 315 and 325 to DAG 300 (as shown in FIG. 3A) upon update of the base layer 301 with operations represented by delta layer 305.

As illustrated in FIG. 4A, states of containers 310-330 are represented collectively using DAG 410. Upon receiving a request for a rollback of the latest update, the relevant update and the side effects of the update represented by nodes in DAG 410 are removed from DAG 410 to generate an updated DAG. As illustrated in FIG. 4A, DAG 410 representing states of containers 310-330 is transformed to generate DAG 420 upon rolling back an update represented by delta layer 305. As part of the transformation, both the update operations, represented by delta layer 305, and the side effects of the update operations in containers 310-330, represented by delta storage 315 and 325, are removed from DAG 410 to generate transformed DAG 420. Transformed DAG 420 includes the states of containers 310-330 without the latest update.

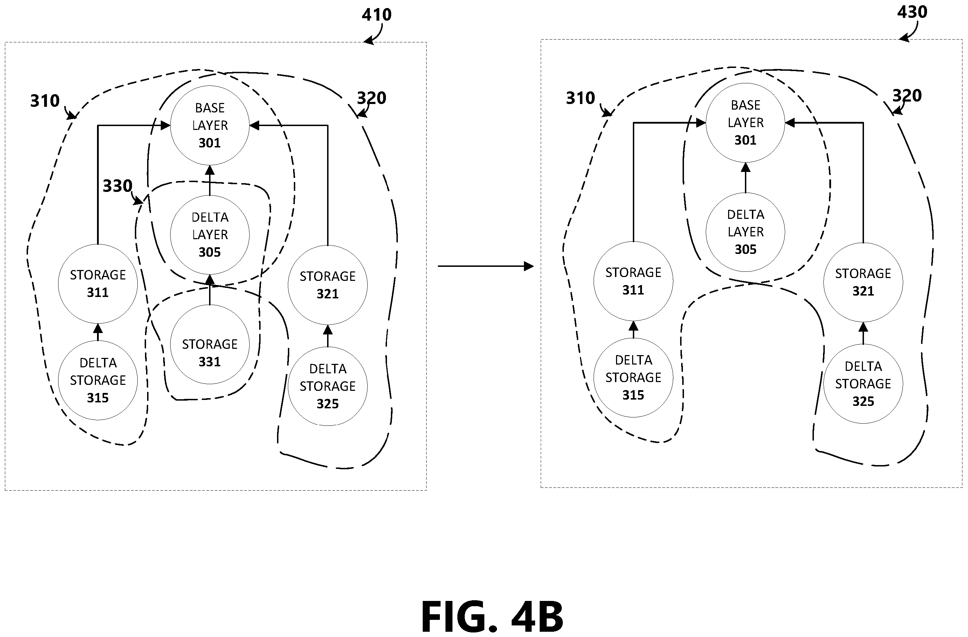

As illustrated in FIG. 4B, DAG 410, representing states of containers 310-330, is transformed to DAG 430 upon shutting down container 330. Transformed DAG 430 does not include the nodes 305 and 331 collectively representing the state of container 330. Containers 310 and 320 continue to maintain their state as presented in DAG 420 with all the nodes representing states of containers 310 and 320 intact.

FIG. 5 is a flow diagram of merging layers to form new combined layers of containers. Layers included in a container (e.g., containers 310, 320, and 330 of FIG. 3) are merged based on their dependency on other layers and their use by one or more containers. Update manager 124 (as shown in FIG. 1) may merge layers in a container. Update manager 124 may communicate with dependency manager 122 to understand dependencies between various layers to determine the layers to merge.

In FIG. 5, containers (not illustrated) with storages 510, 520, and 530 depend on various update layers of base layer 540, which are represented as delta layers 541-544. Servicing layers (e.g., delta layers 541-544) can be merged into their parent layers if the parent layer has no dependency relationship with a storage (e.g., storages 510-530). As illustrated in FIG. 5, delta layer 544 (a child layer) can be merged into its parent delta layer 543, as no storage depends on delta layer 543. By merging delta layer 544 with its parent delta layer 543, a new combined delta layer 547 is formed and associated with storage 530. While storage 530 also depends on the grandparent layer delta layer 542, delta layers 543 and 544 cannot be merged with delta layer 542, as storage 520 depends on delta layer 542. Similarly, delta layer 541 can be merged with delta layer 542 to form a new delta layer 545. By merging layers, such as delta layer 544 with parent delta layer 543, a container representing the files and operations by these layers are reduced to a single set of operations, saving execution time and improving the performance of the container. For example, parent delta layer 543 and delta layer 544 can include operations on the same data and/or files in a storage that results in operations in delta layer 544 overriding the updates on data and/or files, which causes unnecessary execution of operations in parent delta layer 543.

In examples, merging layers of a container comprises applying the modifications of a child layer (e.g., the differences between the child layer and a parent layer) to the parent layer. For instance, in response to an update that causes the values of one or more registry keys in a child layer to be modified from corresponding values in the parent layer, the modified key value in the child layer may be applied to (e.g., used to overwrite) the corresponding values in the parent layer. In another instance, in response to an update that causes the file paths in a child layer to be modified from file paths in the parent layer, the modified file paths in the child layer may be applied to the corresponding file paths in the parent layer.

Having described a system that may be employed by the aspects disclosed herein, this disclosure will now describe methods that may be performed by various aspects of the disclosure. In aspects, methods 600-800 may be executed by a system, such as system 100 of Figure 1. However, methods 600-800 are not limited to such examples.

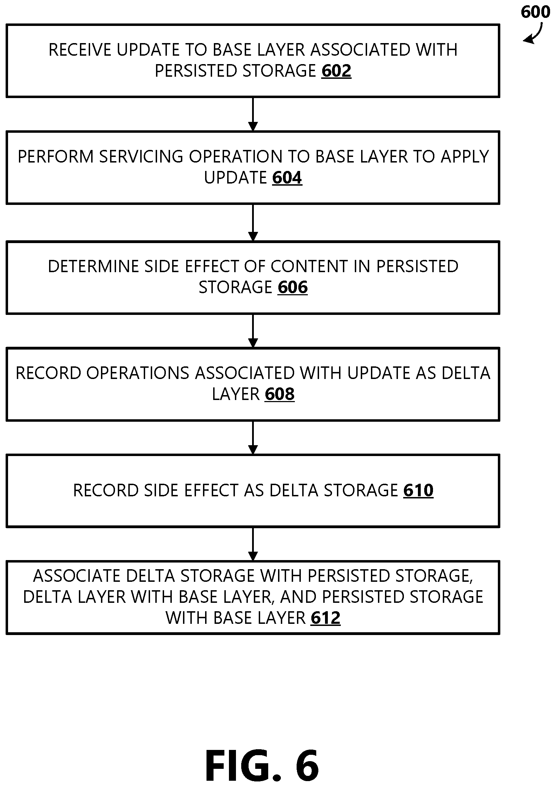

FIG. 6 depicts an example method for managing container updates with persisted storage. At operation 602, an update (e.g., update 210 of FIG. 2) to a base layer (e.g., base layer 301 of FIG. 3A) is received by a container orchestrator (e.g., orchestrator 120 of FIG. 1) to apply updates to a container (e.g., containers 310 of FIG. 3A).

At operation 604, a servicing procedure is performed to apply the update received in operation 602 to the base layer. The servicing procedure causes an update transaction to begin to ensure the update is successfully completed or is reverted due to failures. The update transaction ensures a sequence of operations that are part of a servicing procedure is applied to a base layer by marking the first operation as the beginning of the update transaction and committing the update transaction upon completion of the last operation in the sequence of operations. The servicing procedure includes a set of filesystem operations applied to directories and files of the base layer.

At operation 606, side effects (e.g., side effects 220 of FIG. 2) of content in persisted storages (e.g., storage 311 of FIG. 3A) are determined based on an update of a base layer received in operation 602. Side effects may include filesystem operations to directories and files of a persisted storage. The set of filesystem operations may be adjustments to the customization of base layer directories and files previously present in persisted storage.

At operation 608, operations associated with the update from operation 602 are recorded as a delta layer (e.g., delta layer 305 of FIG. 3B). In some examples, the operations are recorded by generating a node (e.g., delta layer 305 of FIG. 3B) in a DAG (e.g., DAG 350 of FIG. 3B) representing the state of a container.

At operation 610, operations associated with a side effect are recorded as a delta storage (e.g., delta storage 315 of FIG. 3B). In some examples, the operations are recorded by generating a node (e.g., delta storage 315 of FIG. 3B) in a DAG (e.g., DAG 350 of FIG. 3B) representing the state of a container.

At operation 612, a delta storage is associated with persisted storage, a delta layer is associated with the base layer, and persisted storage is associated with the base layer. Limiting associations of a newly recorded delta layer and delta storage to a base layer and a persisted storage isolates the side effects of the update. In some examples, associations are generated by generating nodes in a DAG (e.g., DAG 350 of FIG. 3B) to include additional nodes representing the delta layer and delta storage. In another example, associations are generated by adding additional rows to key-value tables representing the new dependencies between a delta layer and a base layer, and a delta storage and a storage. The update and its side effects are isolated, and the original dependency relationship between persisted storage and the base layer is intact, allowing the base layer to continue to use contents persisted storage as input.

The information about the base layer and delta layers representing various files and operations of a container is stored in a data structure that identifies the layers and the relationship between the layers. The data structure also stores information about the content associated with the layers. In some examples, the data structure is a DAG comprising nodes representing the base layer (e.g., base layer 305 of FIG. 3B), the delta layers (e.g., delta layers 315 and 325 of FIG. 3B), and storages (e.g., persisted storage 311, delta storage 315, and delta storage 325 of FIG. 3B) representing content associated with a base layer and delta layers. The relationship information is presented in the DAG using edges connecting nodes in the direction of dependency. For example, the relationship between an update, represented by delta layer 305, to the first set of operations, represented by base layer 301 (as shown in FIG. 3B), is represented by an arrow from delta layer 305 to base layer 301. Similarly, the dependency of side effects on content in storage 311 (as shown in FIG. 3B) is represented by the arrow from delta storage 315 to storage 311. In some examples, the DAG includes a hierarchy of delta layers representing sequentially applied updates to a container, forming a hierarchy due to the dependency of layers, which is represented by directional edges in a DAG. For example, delta layers 541-544 (as shown in FIG. 5) form a hierarchy of layers representing updates sequentially applied to the original files of a container represented by base layer 540 (as shown in FIG. 5). The hierarchy of layers limits the order in which the updates are applied to the original files of a container represented by a base layer.

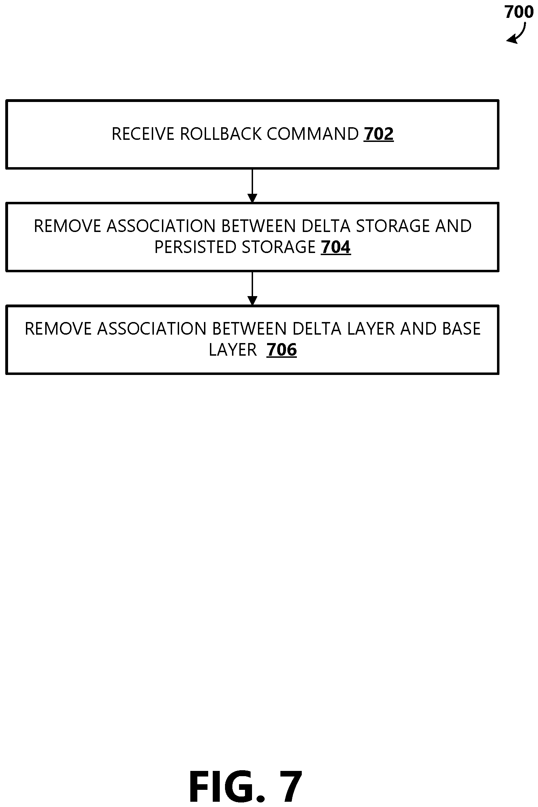

FIG. 7 depicts an example method for managing rollbacks of container updates with persisted storage. At operation 702, a rollback command to rollback previous updates to a base layer (e.g., base layer 301 of FIG. 3C) is received by a container orchestrator (e.g., orchestrator 120 of FIG. 1). Update service 150 (as shown in FIG. 1) may transmit a rollback command based on the review of a result of a previous update request. The review of a result may include the stability of a container (e.g., container 310 of FIG. 3C) upon application of updates to a base layer of a container. The orchestrator may use a dependency manager (e.g., dependency manager 122) to determine the content and operations associated with the update. The dependency manager may identify content and operations by reviewing a DAG (e.g., DAG 370 of FIG. 3C) to identify a delta storage (e.g., delta storage 315 of FIG. 3C) and a delta layer (e.g., delta layer 305 of FIG. 3C) representing the content and operations associated with an update that is requested to be rolled back. In some examples, a mapping may exist between an update applied to a container and nodes in a DAG representing the current state of a container. The mapping includes the mapping to the operations of the update represented by a delta layer in a DAG and the side effect of applying the operations of the update on persisted storage represented by a delta storage.

At operation 704, an association between a delta storage and a persisted storage (e.g., storage 311 of FIG. 3C) is removed. Removal of the association includes removal of the delta storage from a DAG, which causes the removal of an association represented by an edge between the delta storage and the persisted storage in the DAG. In addition to removing the entry for delta storage in a DAG, the physical location of delta storage is removed by deleting files in the physical location of delta storage. In some examples, delta storage removal from a DAG results in the physical location of a delta storage of a container not being accessible and used for other purposes.

At operation 706, an association between a delta layer and a base layer (e.g., base layer 301 of FIG. 3C) is removed. Removal of the association includes removal of the delta layer from the DAG, which causes the removal of an association represented by an edge between the delta layer and the base layer in the DAG. In addition to removing the entry for delta storage in a DAG, the physical location of delta storage is removed by deleting files in the physical location of delta storage. In some examples, delta storage removal from a DAG results in the physical location of a delta storage of a container not being accessible and used for other purposes. The removal of a delta layer may include reversing operations of an update to a container applied during an update. In some examples, a container orchestrator may request to restart a container to rollback an update applied to a container. The restart occurs after the removal of delta storage and delta layer associated with an update from a DAG. A container, upon restart, includes only software and content represented by nodes in a DAG from which nodes representing a delta layer and a delta storage have been removed in operations 704 and 706. In some examples, the files in a physical location of a delete storage may not be deleted as part of a rollback. For example, a request to rollback an update represented by delta layer 305 (as shown in FIG. 3C) in container 310 will only delete files in a physical location associated with delta storage 315 but will keep files in a physical location associated with delta layer 305 as container 330 was instantiated when the software state included both base layer 301 and delta layer 305 (as illustrated in FIG 3C).

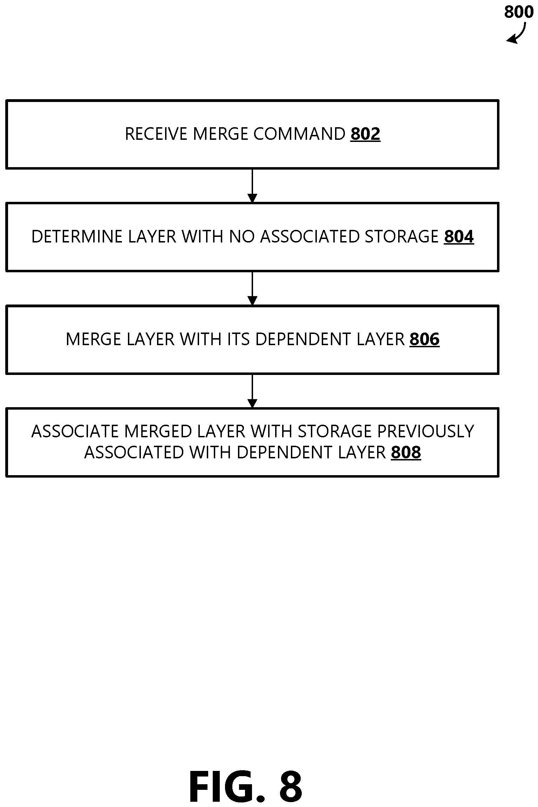

FIG. 8 depicts an example method for merging updates of containers managed using DAGs. At operation 802, a merge command is received to merge the layers (e.g., delta layers 541-544 of FIG. 5) representing updates to a container's base layer (e.g., base layer 540 of FIG. 5) over time.

At operation 804, a layer is identified as a candidate layer to merge with another layer if the layer is not associated with storage. System 100 identifies layers with no associated storage to ensure the side effects associated with a layer are not lost. A layer may not have an associated storage if the application of update operations represented by a layer did not produce a side effect or its side effects have been nullified by a future update operation. For example, update operations represented by delta later 541 (as shown in FIG. 5) either had no side effect on content in storage 510 or the generated side effects were reversed or updated by update operations represented by delta layer 542.

At operation 806, the layer identified in operation 804 is merged with its dependent layer, which has an associated storage. If a dependent layer does not have an associated storage, that dependent layer is also merged with a dependent layer down the hierarchy of layers. A dependent layer with associated storage is identified down the hierarchy of dependent layers to merge with the layer identified in operation 804. For example, delta layer 541 is merged with dependent delta layer 542 with associated storage 520 to form merged delta layer 545. The merged layer includes a combined set of update operations represented by individual layers. For example, combined operations may include a combined set of files representing updates of the merged layers.

At operation 808, the new merged layer generated in operation 806 is associated with storage of a dependent layer. For example, merged delta layer 545 is associated with storage 520 previously associated with delta layer 542 with which delta layer 541 is merged to form delta layer 545.

FIG. 9 is a block diagram illustrating the physical components (e.g., hardware) of a computing device 900 with which examples of the present disclosure may be practiced. The computing device components described below may be suitable for one or more of the components of the systems described above. In a basic configuration, the computing device 900 includes at least one processing unit 902 and a system memory 904. Depending on the configuration and type of computing device 900, the system memory 904 may comprise volatile storage (e.g., random access memory), non-volatile storage (e.g., read-only memory), flash memory, or any combination of such memories. The system memory 904 may include an operating system 905 and one or more program modules 906 suitable for running software applications 950 (e.g., orchestrator 120, dependency manager 122, and update manager 124 of FIG. 1) and other applications.

The operating system 905 may be suitable for controlling the operation of the computing device 900. Furthermore, aspects of the disclosure may be practiced in conjunction with a graphics library, other operating systems, or any other application program and is not limited to any particular application or system. This basic configuration is illustrated in FIG. 9 by those components within a dashed line 908. The computing device 900 may have additional features or functionality. For example, the computing device 900 may also include additional data storage devices (removable and/or non-removable) such as, for example, magnetic disks, optical disks, or tape. Such additional storage is illustrated in FIG. 9 by a removable storage device 909 and a non-removable storage device 910.

As stated above, a number of program modules and data files may be stored in the system memory 904. While executing on the processing unit 902, the program modules 906 may perform processes including one or more of the stages of methods 600-800 illustrated in FIGS. 6-8. Other program modules that may be used in accordance with examples of the present disclosure and may include applications such as search engines and database applications, etc.

Furthermore, examples of the disclosure may be practiced in an electrical circuit comprising discrete electronic elements, packaged or integrated electronic chips containing logic gates, a circuit utilizing a microprocessor, or on a single chip containing electronic elements or microprocessors. For example, examples of the disclosure may be practiced via a system-on-a-chip (SOC) where each or many of the components illustrated in FIG. 9 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to detecting an unstable resource may be operated via application-specific logic integrated with other components of the computing device 900 on the single integrated circuit (chip). Examples of the present disclosure may also be practiced using other technologies capable of performing logical operations such as, for example, AND, OR, and NOT, including mechanical, optical, fluidic, and quantum technologies.

The computing device 900 may also have one or more input device(s) 912 such as a keyboard, a mouse, a pen, a sound input device, a touch input device, a camera, etc. The output device(s) 914 such as a display, speakers, a printer, etc. may also be included. The aforementioned devices are examples and others may be used. The computing device 900 may include one or more communication connections 916 allowing communications with other computing devices 918. Examples of suitable communication connections 916 include RF transmitter, receiver, and/or transceiver circuitry; universal serial bus (USB), parallel, and/or serial ports.

The term computer readable media as used herein includes volatile and nonvolatile, removable and non-removable media implemented in any method or technology for storage of information, such as computer readable instructions, data structures, or program modules. The system memory 904, the removable storage device 909, and the non-removable storage device 910 are all computer readable media examples (e.g., memory storage.) Computer readable media include random access memory (RAM), read-only memory (ROM), electrically erasable programmable ROM (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 900. Any such computer readable media may be part of the computing device 900. Computer readable media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, RF, infrared, and other wireless media.

In an aspect, the technology relates to the persistence of container updates. The system includes at least one processor, and memory coupled to the processor, the memory consisting of computer executable instructions that are executed by the system to perform operations. The operation include: receiving an update to a base layer of the device, wherein the base layer is associated with a persisted storage of a container stored by the device and content of the persisted storage is used as input to the base layer, performing a first sequence of operations to apply the update to the base layer, determining a first side effect of the update on the content of the persisted storage, recording the first sequence of operations as a delta layer for the base layer, recording the first side effect as a delta storage for the persisted storage, associating the delta layer and the persisted storage with the base layer, and associating the delta storage with the persisted storage, such that the content of the persisted storage is used as input to the delta layer.

In an example, the operations further include: receiving a rollback command for the update, removing an association between the delta storage and the persisted storage, and removing an association between the delta layer and the base layer.

In an example, determining the first side effect of the update on the content of the persisted storage includes determining layers of the content in the persisted storage, and determining side effects of the layers of the content in the persisted storage.

In an example, a data structure stores information about the base layer, the delta layer, the persisted storage, and the delta storage, and relationship information between at least two of the base layer, the delta layer, the persisted storage, and the delta storage. In another example, wherein the data structure is a directed acyclic graph comprising nodes representing the base layer, the delta layer, the persisted storage, and the delta storage. In still another example, a relationship between the base layer and the delta layer is represented by an edge connecting a node of the base layer to a node of the delta layer. In yet another example, a direction of the edge connecting the node of the base layer to the node of the delta layer represents a dependency between the base layer and the delta layer. In yet another example, a relationship between the persisted storage and the delta storage is represented by an edge connecting a node of the persisted storage to a node of the delta storage. In still yet another example, a direction of the edge connecting the node of the persisted storage to the node of the delta storage represents a dependency between the persisted storage and the delta storage.

In an example, the delta layer comprises a hierarchy of sequentially applied delta layers.

In an example, the operations further include: executing the first set of operations recorded as the delta layer using the content of the persisted storage as input.

In an example, the operations further include: receiving a second update to the base layer of the device, wherein the second update includes a second sequence of operations, applying the second update to the base layer by performing the second sequence of operations, determining a second side effect of the update for the base layer and the delta layer, recording the second sequence of operations as a second delta layer of the base layer and the delta layer, recording the second side effect as a second delta storage, associating the second delta storage to the delta storage, and associating the second delta layer to the delta layer.

In an example, the operations further include: receiving a third update to the base layer, applying the third update to the base layer by performing a third sequence of operations, recording the third sequence of operations as a third delta layer, wherein the third sequence of operations does not have a side effect on the content of the persisted storage, and associating the third delta layer with the base layer.

In an example, the operations further include, receiving a command to merge layers of the device, determining a parent layer of the device that is not associated with a storage of the container, merging the parent layer with a dependent layer to form a merged layer, wherein the dependent layer is associated with a dependent storage that includes a side effect of the persisted storage, and associating the merged layer with the storage associated with the dependent layer.

In another aspect, the technology related to a computer-implemented method for persistence of container updates. The method includes: receiving an update to a base layer of a device, wherein the base layer is associated with a persisted storage of a container stored by the device and content of the persisted storage is used as input to the base layer, wherein the base layer includes a first sequence of operations and the persisted storage is a read-only storage, performing a second sequence of operations to apply the update to the base layer, determining a side effect of the update on the content of the persisted storage, recording the second sequence of operations as a delta layer for the base layer, recording the side effect as a delta storage for the persisted storage, wherein the delta storage is a read-write storage, and associating the delta layer and the persisted storage with the base layer, and associating the delta storage with the persisted storage, such that the content of the persisted storage is used as input to the delta layer.

In an example, the persisted storage includes user inputs to the container. In another example, the delta storage includes the side effect to maintain the user inputs in the persisted storage.

In an example, the method further includes: receiving a restart command for the container, performing the first sequence of operations included in the base layer using content in the persisted storage, and performing the second sequence of operations included in the delta layer using content in the delta storage.

In still another aspect, the technology relates to the persistence of container updates. The system includes at least one processor, and memory coupled to the processor, the memory consisting of computer executable instructions that are executed by the system to perform operations. The operation include: receiving an update to a base layer of a device, wherein the base layer is associated with a persisted storage of a container stored by the device and content of the persisted storage is used as input to the base layer, applying a sequence of operations to the base layer to update the base layer, determining a side effect of the update on the content of the persisted storage, recording the sequence of operations as a delta layer of the base layer in a graph, wherein the delta layer and the base layer are first set of nodes in the graph and the first set of nodes are connected by a first edge, and recording the side effect as a delta storage of the persisted storage in the graph, wherein the delta storage and the persisted storage are second set of nodes in the graph and the second set of nodes are connected by a second edge.

In an example, the operations further include: receive a restart command for the container, review relationship between layers in the graph to determine a hierarchy of layers, and perform operations included in each layer of the hierarchy of layers in a sequential manner using content of storage associated with the each layer.

Examples of the present disclosure describe devices, systems, and methods for persisting containers across updates. In examples, a computing device receives an update to a base layer of the device associated with a persisted storage of a container stored by the device. The content of the persisted storage is used as input to the base layer. The device applies the update to the base layer and determines the side effects of the update on the content of the persisted storage. The device then records the sequence of operations as a delta layer for the base layer and side effects as a delta storage for the persisted storage. Recording includes associating the delta storage with the persisted storage, the delta layer with the base layer, and the persisted storage with the base layer, such that the content of the persisted storage is used as input to the delta layer.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the broader aspects of the general inventive concept embodied in this application that do not depart from the broader scope of the claimed disclosure.

Furthermore, those skilled in the art will recognize that boundaries between the functionality of the above-described operations are merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the disclosure provides specific examples, various modifications and changes can be made without departing from the scope of the disclosure as set forth in the claims below. Accordingly, the specification and figures are to be regarded in an illustrative rather than a restrictive sense, and all such modifications are intended to be included within the scope of the present disclosure. Any benefits, advantages, or solutions to problems that are described herein with regard to a specific example are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A device (900) comprising:
a processor (902); and
memory (904) comprising computer executable instructions that, when executed, perform operations comprising:
receiving (602) an update to a base layer of the device, wherein the base layer is associated with a persisted storage of a container stored by the device and content of the persisted storage is used as input to the base layer;
performing (604) a first sequence of operations to apply the update to the base layer;
determining (606) a first side effect of the update on the content of the persisted storage;
recording (608) the first sequence of operations as a delta layer for the base layer;
recording (610) the first side effect as a delta storage for the persisted storage;
associating (612) the delta layer and the persisted storage with the base layer; and
associating (612) the delta storage with the persisted storage, such that the content of the persisted storage is used as input to the delta layer.

2. The device of claim 1, wherein the operations further comprise:
receiving a rollback command for the update;
removing an association between the delta storage and the persisted storage; and
removing an association between the delta layer and the base layer.

3. The device of claim 1 or claim 2, wherein determining the first side effect of the update on the content of the persisted storage comprises:
determining layers of the content in the persisted storage; and
determining side effects of the layers of the content in the persisted storage.

4. The device of any one of the preceding claims, wherein a data structure stores:
information about the base layer, the delta layer, the persisted storage, and the delta storage; and
relationship information between at least two of the base layer, the delta layer, the persisted storage, and the delta storage.

5. The device of claim 4, wherein the data structure is a directed acyclic graph comprising nodes representing the base layer, the delta layer, the persisted storage, and the delta storage.

6. The device of claim 5, wherein a relationship between the base layer and the delta layer is represented by an edge connecting a node of the base layer to a node of the delta layer, and optionally a direction of the edge connecting the node of the base layer to the node of the delta layer represents a dependency between the base layer and the delta layer.

7. The device of claim 5, wherein a relationship between the persisted storage and the delta storage is represented by an edge connecting a node of the persisted storage to a node of the delta storage, and optionally a direction of the edge connecting the node of the persisted storage to the node of the delta storage represents a dependency between the persisted storage and the delta storage.

8. The device of any one of the preceding claims, wherein the delta layer comprises a hierarchy of sequentially applied delta layers.

9. The device of any one of the preceding claims, wherein the operations further comprise:
executing the first set of operations recorded as the delta layer using the content of the persisted storage as input.

10. The device of any one of the preceding claims, wherein the operations further comprise:
receiving a second update to the base layer of the device, wherein the second update includes a second sequence of operations;
applying the second update to the base layer by performing the second sequence of operations;
determining a second side effect of the update for the base layer and the delta layer;
recording the second sequence of operations as a second delta layer of the base layer and the delta layer;
recording the second side effect as a second delta storage;
associating the second delta storage to the delta storage; and
associating the second delta layer to the delta layer.

11. The device of any one of the preceding claims, wherein the operations further comprise:
receiving a third update to the base layer;
applying the third update to the base layer by performing a third sequence of operations;
recording the third sequence of operations as a third delta layer, wherein the third sequence of operations does not have a side effect on the content of the persisted storage; and
associating the third delta layer with the base layer.

12. The device of any one of the preceding claims, wherein the operations further comprise:
receiving a command to merge layers of the device;
determining a parent layer of the device that is not associated with a storage of the container;
merging the parent layer with a dependent layer to form a merged layer, wherein the dependent layer is associated with a dependent storage that includes a side effect of the persisted storage; and
associating the merged layer with the storage associated with the dependent layer.

13. A computer-implemented method (600) comprising:
receiving (602) an update to a base layer of a device, wherein the base layer is associated with a persisted storage of a container stored by the device and content of the persisted storage is used as input to the base layer, wherein the base layer includes a first sequence of operations and the persisted storage is a read-only storage;
performing (604) a second sequence of operations to apply the update to the base layer;
determining (606) a side effect of the update on the content of the persisted storage;
recording (608) the second sequence of operations as a delta layer for the base layer;
recording (610) the side effect as a delta storage for the persisted storage, wherein the delta storage is a read-write storage; and
associating (612) the delta layer and the persisted storage with the base layer; and
associating (612) the delta storage with the persisted storage, such that the content of the persisted storage is used as input to the delta layer.

14. The method of claim 13, wherein the method further comprises:
receiving a restart command for the container;
performing the first sequence of operations included in the base layer using content in the persisted storage; and
performing the second sequence of operations included in the delta layer using content in the delta storage.

15. A system (100) comprising:
a processor (902); and
memory (904) comprising computer executable instructions that, when executed, perform operations comprising:
receiving (602) an update to a base layer of a device, wherein the base layer is associated with a persisted storage of a container stored by the device and content of the persisted storage is used as input to the base layer;
applying (604) a sequence of operations to the base layer to update the base layer;
determining (606) a side effect of the update on the content of the persisted storage;
recording (608) the sequence of operations as a delta layer of the base layer in a graph, wherein the delta layer and the base layer are first set of nodes in the graph and the first set of nodes are connected by a first edge; and
recording (610) the side effect as a delta storage of the persisted storage in the graph, wherein the delta storage and the persisted storage are second set of nodes in the graph and the second set of nodes are connected by a second edge.
